Europäisches Patentamt

European Patent Office

Office européen des brevets

(19)

(11) **EP 1 141 535 B1**

(12) **FASCICULE DE BREVET EUROPEEN**

(45) Date de publication et mention
de la délivrance du brevet:
**07.09.2005 Bulletin 2005/36**

(51) Int Cl.⁷: **F02M 21/02**, F02M 21/06

(21) Numéro de dépôt: **99958296.8**

(86) Numéro de dépôt international:
**PCT/FR1999/003094**

(22) Date de dépôt: **10.12.1999**

(87) Numéro de publication internationale:
**WO 2000/037790 (29.06.2000 Gazette 2000/26)**

(54) **DETENDEUR-RECHAUFFEUR DE GAZ D'UN SYSTEME D'INJECTION POUR MOTEUR A COMBUSTION INTERNE**

GASHEIZER UND DRUCKREDUZIERREGLER FÜR EIN EINSPRITZSYSTEM EINER BRENNKRAFTMASCHINE

GAS REGULATOR AND HEATER IN AN INTERNAL COMBUSTION ENGINE INJECTION SYSTEM

(84) Etats contractants désignés:
**DE ES GB IT**

(30) Priorité: **22.12.1998 FR 9816267**

(43) Date de publication de la demande:
**10.10.2001 Bulletin 2001/41**

(73) Titulaire: **Renault s.a.s.**
**92100 Boulogne Billancourt (FR)**

(72) Inventeur: **MAISSANT, Jean-Pierre**
**F-92500 Rueil Malmaison (FR)**

(56) Documents cités:
WO-A-94/04813          WO-A-95/22691
DE-A- 3 612 994        DE-A- 3 941 341
US-A- 3 114 357        US-A- 5 343 847

## Description

L'invention concerne un détendeur-réchauffeur de gaz d'un système d'injection monopoint distribué ou multipoint gazeux pour moteur à combustion interne alimenté par un carburant gazeux, du Gaz de Pétrole Liquéfié G.P.L. ou du Gaz Naturel pour Véhicule G.N.V. par exemple..., moteur destiné notamment à équiper un véhicule automobile.

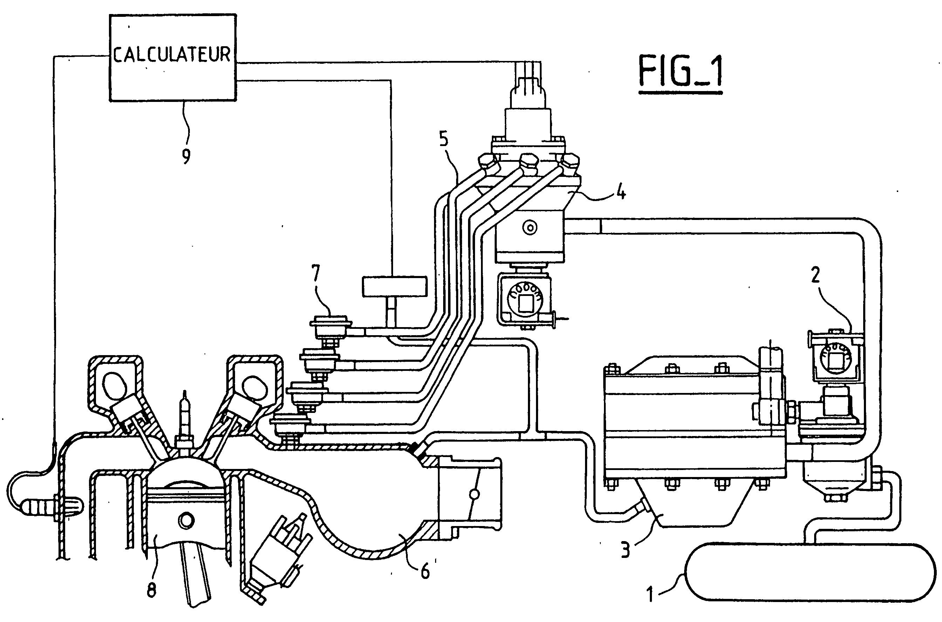

L'architecture d'un tel système, selon un mode de réalisation actuel de la marque KOLTEC-NECAM représenté sur le schéma de la figure 1, comprend un réservoir de gaz 1 relié au moyen d'une électrovanne 2 de sécurité à un vapo-détendeur 3 dont le rôle est de vaporiser le gaz lorsqu'il est liquéfié, comme le G.P.L., ou de le réchauffer lorsqu'il est sous forme gazeuse, comme le G.N.V. ou le G.P.L. après sa vaporisation, d'asservir la pression de sortie du gaz à une valeur donnée; constante ou variable, et de couper l'alimentation du moteur en gaz par l'intermédiaire de l'électrovanne normalement fermée et placée en amont du circuit de détente.

La sortie du détendeur 3 est reliée à un doseur-distributeur de gaz 4, de type injecteur, qui reçoit le gaz à la pression de sortie du détendeur pour en assurer le contrôle du débit et sa distribution sur chaque branche d'un collecteur d'admission d'air 6 du moteur, par l'intermédiaire de tuyaux 5.

Des buses 7 d'alimentation, fixées sur le collecteur et en nombre égal à celui des cylindres 8, du type régulateurs de pression zéro, sont destinées à diminuer fortement les fluctuations de pression d'alimentation du gaz dans le moteur, en aval du doseur distributeur. Lorsque le débit de gaz est subsonique au droit des sections assurant la distribution et/ou le contrôle de débit, ces fluctuations sont génératrices de dispersions importantes de débit de gaz, poste à poste, du doseur-distributeur, et donc de richesse cylindre à cylindre.

Par ailleurs, les buses assurent une coupure franche de l'alimentation en carburant gazeux (Fuel Cut Off, FCO) au plus proche de la zone d'injection sur le collecteur d'admission, afin d'éviter des émissions d'hydrocarbures imbrûlés lors d'une décélération. Elles permettent également d'éviter la vidange des tuyaux reliant le doseur-distributeur au collecteur d'admission lors d'une coupure de gaz en décélération, ce qui autorise un réattelage plus rapide du moteur.

Ces deux derniers points sont d'autant plus importants que l'actuateur du doseur-distributeur est lent et que les tuyaux de liaison entre ce doseur-distributeur et le collecteur sont longs.

L'architecture comporte de plus des tuyauteries de liaison entre les différents composants, un calculateur électronique 9 de contrôle moteur alimenté en carburant gazeux, qui peut être le même, lorsque le moteur est également alimenté en essence, que le calculateur électronique de contrôle pilotant l'alimentation d'essence.

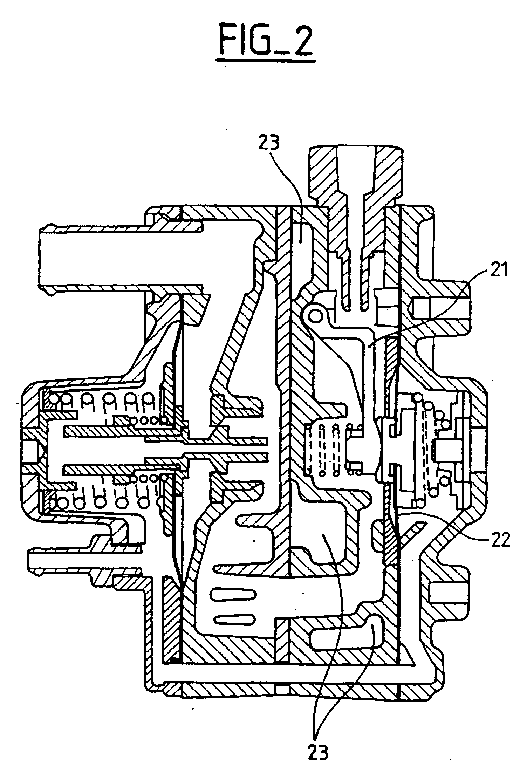

Un dispositif vapo-détendeur actuel, de la même marque KOLTEC NECAM, utilisé dans les applications en véhicules alimentés au G.P.L. et au G.N.V. est représenté sur la figure 2, vu en coupe transversale. Il comporte une électrovanne de sécurité non figurée, assurant la coupure de l'alimentation en carburant gazeux et jouant le rôle d'une vanne de sécurité normalement fermée. Il comporte également un système de contrôle de la pression de sortie effectué par un dosage mécanique du débit d'alimentation du détendeur en carburant gazeux. Ce dosage est obtenu par le déplacement d'un obturateur 21 solidaire d'une membrane 22, qui elle-même se déplace en fonction de la différence de pression exercée sur chacune de ses faces. Le système comporte également un échangeur de chaleur 23 utilisant le liquide de refroidissement du moteur pour vaporiser le carburant liquide.

Les systèmes d'alimentation de gaz actuellement commercialisés utilisent des détendeurs de type mécanique, avec membranes et ressorts. Ces derniers ont pour inconvénients non seulement un encombrement très contraignant, mais de plus un comportement caractérisé par des effets retard importants, un fort hystérésis, une fragilité vis à vis des coupures franches en décélération provoquées par le doseur-distributeur, et une dispersion importante de régulation de pression due à des dispersions importantes de fabrication, c'est-à-dire dispersion de raideur des ressorts, réglage de leur précontraintes... et au vieillissement des pièces mécaniques.

En effet, la régulation de pression se fait en agissant sur le débit d'entrée de gaz, via un système mécanique présentant une certaine inertie. Par ailleurs, le réchauffement, et à une échelle bien plus importante, la vaporisation du gaz dans le cas du G.P.L. augmentent la pression de sortie du détendeur avec une inertie qui dépend de la qualité des échanges thermiques, de la composition du gaz, de sa pression et de sa température en entrée du détendeur, de la température et du débit de liquide de refroidissement moteur qui passe dans le détendeur à travers l'échangeur 23 etc... La sensibilité et le temps de réponse du mécanisme de régulation de pression sont d'autant plus élevés que la membrane 22 qu'il utilise est grande. Les meilleurs détendeurs mécaniques sont donc très encombrants, mais ils possèdent une plus grande sensibilité aux accélérations de leur équipage mobile, les membranes et les ressorts étant plus lourds. Les mouvements du véhicule et l'état des routes peuvent alors provoquer des dysfonctionnements dans la régulation de pression en sortie détendeur. Dans la mesure où ces détendeurs sont mécaniques, il n'y a aucune correction prédictive de pression possible, ni au vu du besoin moteur, ni au vu des échanges de chaleur du détendeur, ni au vu de l'inertie mécanique des éléments mobiles du détendeur. Ce sont donc les dynamiques peu élevées des détendeurs alliées à une impossibilité de réaliser une correction prédictive, qui sont à l'origine d'effets retard importants. Ces derniers sont amplifiés dans le cas du G.P.L. du fait de la dynamique de vaporisation qui se rajoute aux phénomènes précédents.

Les phénomènes d'hystérésis sont dus à la nature dissymétrique de la régulation. Lorsque la pression en sortie du détendeur est plus faible que la consigne imposée par le réglage des efforts du ressort sur la membrane, le mécanisme de régulation de pression autorise alors l'entrée du gaz G.P.L. liquide ou G.N.V., dans le détendeur qui, en se vaporisant et/ou en se réchauffant augmente la pression. Dans le cas du G.N.V., le gaz entre déjà sous forme vapeur et augmente donc la pression par accroissement du nombre de moles de gaz et par augmentation de l'agitation moléculaire due à son réchauffement.

Lorsque la pression en sortie du détendeur est plus forte que la consigne, le mécanisme de régulation de pression obture alors l'arrivée de gaz dans le détendeur qui n'a donc plus d'action correctrice possible. Seule la consommation de gaz par le moteur peut alors faire chuter la pression pour la ramener à sa valeur de consigne. Ce phénomène est très marqué lors d'une coupure en décélération de l'alimentation en gaz, réalisée par le doseur-distributeur par exemple. En effet, le gaz dispose de plus de temps pour se réchauffer et la pression au réattelage du véhicule est alors supérieure à la consigne. Ce phénomène est très nettement amplifié dans deux cas, d'une part lorsque la pression du gaz est asservie à la pression collecteur, soit 1 bar + Pcoll dans le cas du détendeur de KOLTEC NECAM - la pression au réattelage peut valoir 1.9 bar au lieu de 1.25 bar - ; et d'autre part, lorsque le gaz est du G.P.L., et qu'une partie du G.P.L. n'a pas eu le temps de se vaporiser avant la fermeture de l'orifice d'entrée de gaz dans le détendeur. Celle-ci va donc s'effectuer avec du retard en augmentant sensiblement la pression de sortie du détendeur.

Deux solutions complémentaires sont alors envisageables pour atténuer cet effet. Il faut augmenter le nombre d'étages de régulation de pression du détendeur, afin de limiter le phénomène lié au réchauffement du gaz en général et à la vaporisation du G.P.L. en particulier, et réaliser une correction en pression du débit de carburant au niveau du doseur-distributeur pour un système monopoint distribué ou des injecteurs gaz pour un système multipoint gazeux.

La première solution augmente le volume du détendeur et sa perte de charge, ce qui n'est pas souhaitable compte tenu des contraintes d'encombrement sous capot moteur auxquelles les constructeurs automobiles sont confrontés et des limitations de fonctionnement naturelles liées à des pressions trop faibles dans le réservoir G.P.L. par temps froid.

La deuxième solution connaît des limites du fait de la technologie des injecteurs de gaz ou de celle des doseurs-distributeurs. En effet, se contenter de corriger ce type de défaut sans le réduire à la source, nécessite des dynamiques de dosage du gaz plus importantes, difficiles à réaliser à bas coût. Dans tous les cas, une correction est d'autant plus efficace que le défaut à corriger est faible.

Enfin, les membranes sont très sensibles aux coupures franches de débit de gaz provoquées par les organes régulateurs de débit, que ce soit des doseurs-distributeurs ou des injecteurs gaz, placés en aval des détendeurs. Cette sensibilité s'explique par des efforts liés à une dynamique de débit de G.P.L. liquide qu'il faut rompre brutalement, ce qui met en jeu des efforts importants néfastes à la tenue en endurance des membranes.

L'invention vise à réduire sensiblement les inconvénients précédents liés à la technologie des détendeurs mécaniques, en proposant une conception nouvelle d'un détendeur à régulation de pression électronique pour carburants gazeux du type G.P.L. ou G.N.V., à partir de moyens d'asservissement de sa pression de sortie et d'un échangeur de chaleur, et un mode particulier d'asservissement de sa pression de sortie.

Pour cela, l'objet de l'invention est un dispositif détendeur-réchauffeur de gaz d'un système d'injection de carburant gazeux pour moteur à combustion interne, comportant un dispositif échangeur de chaleur utilisant le liquide de refroidissement du moteur et des moyens de contrôle de la pression de sortie du gaz, caractérisé en ce que l'asservissement de la pression de sortie du carburant gazeux est assuré par un contrôle du débit du carburant gazeux, en entrée du dispositif détendeur-réchauffeur, au moyen d'un calculateur électronique.

Selon une autre caractéristique de l'invention, le dispositif détendeur-réchauffeur de gaz est tel que la pression de sortie du carburant gazeux est regulée électroniquement à une valeur proportionnelle à la pression dans le collecteur d'admission du moteur par pilotage du débit de gaz en entrée du calculateur électronique pour obtenir un fonctionnement en régime sonique du dispositif de distribution et/ou d'injection du gaz, pour au moins une plage de fonctionnement du moteur.

Selon un exemple de réalisation, le dispositif détendeur-réchauffeur de gaz d'un système d'injection de carburant gazeux, est caractérisé en ce que le dispositif échangeur de chaleur comprend, dans une enveloppe extérieure dans laquelle circule le liquide de refroidissement du moteur, un tuyau réalisé en matériau bon conducteur de la chaleur et compatible d'une part avec le carburant gazeux qu'il transporte et d'autre part avec le liquide dé refroidissement, ce tuyau étant relié en entrée de l'échangeur au tuyau d'arrivée du carburant gazeux dont le dosage est effectué par un organe, piloté par le calculateur électronique de contrôle, qui reçoit la mesure de la pression du carburant en sortie du détendeur, délivrée par un capteur de pression.

D'autres caractéristiques et avantages de l'invention apparaîtront à la lecture de la description de plusieurs modes de réalisation illustrée par les figures suivantes qui, outre les figures 1 et 2 sont déjà décrites, sont :

- la figure 3 : un schéma de principe d'un dispositif détendeur de gaz d'un système d'injection selon l'invention ;
- les figures 4, 5 et 10 : trois exemples d'un premier mode de réalisation d'un dispositif détendeur de gaz selon l'invention ;
- les figures 6 à 9a et 9b : quatre exemples d'un deuxième mode de réalisation d'un dispositif détendeur de gaz selon l'invention.

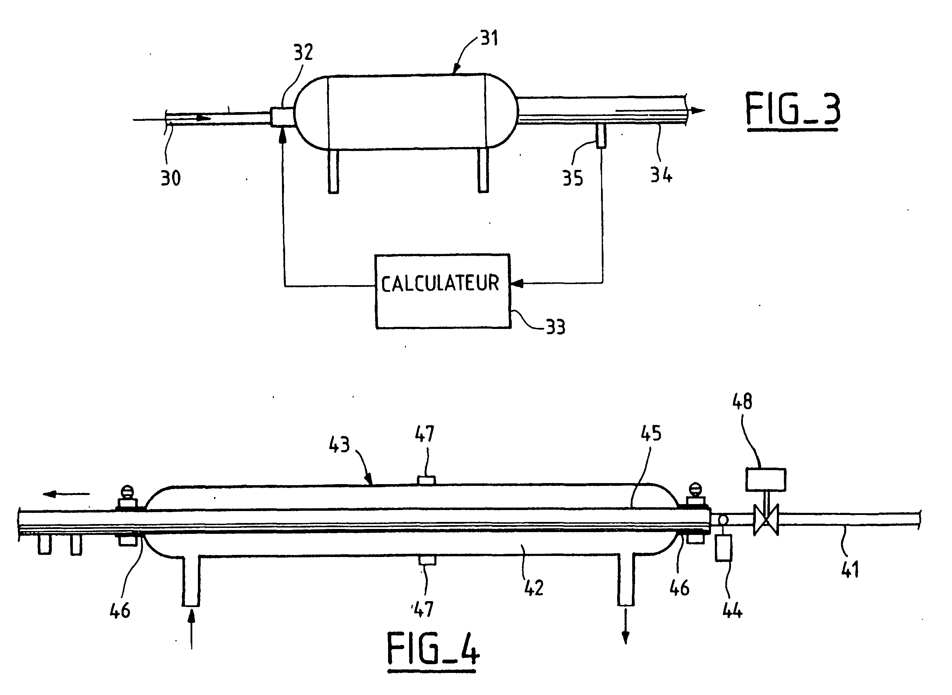

Le schéma de principe du détendeur, à régulation de pression électronique, objet de l'invention, est représenté sur la figure 3.

Le carburant gazeux, que ce soit du G.P.L. liquide ou G.N.V. est dosé en entrée 30 d'un échangeur de chaleur 31, par un organe obturateur électro-magnétique 32 piloté par le calculateur électronique 33 de contrôle moteur. Ce calculateur peut être celui du contrôle du moteur alimenté en essence, ou celui pour l'alimentation en carburant gazeux ou celui pour l'alimentation en bicarburant, essence et gaz. Cet organe 32 est constitué d'un dispositif de dosage, du type vanne à boisseau, rotatif ou non, ou à pointeau, mue par un moteur pas à pas, un moteur couple, un moteur à courant continu ou tout autre moyen permettant de faire coulisser ou tourner le dispositif de dosage. Cet organe 32 peut aussi être du type injecteur électromagnétique, constitué d'un solénoïde et d'une petite soupape ou aiguille, tel qu'un injecteur gros débit utilisé en essence par exemple.

Le pilotage du débit, effectué par le calculateur 33 de contrôle moteur, s'effectuera de façon pulsée ou continue suivant l'organe 32 de régulation de débit retenu. La pression en sortie 34 du détendeur sera mesurée par un capteur de pression 35, par exemple du type de ceux utilisés pour mesurer la pression dans le collecteur d'admission d'un moteur suralimenté. L'information délivrée par le capteur de pression 35 sera récupérée par le calculateur de contrôle moteur 33 qui pilotera le débit de gaz en entrée du détendeur en conséquence pour asservir la pression à la consigne fournie par le calculateur de contrôle moteur 33.

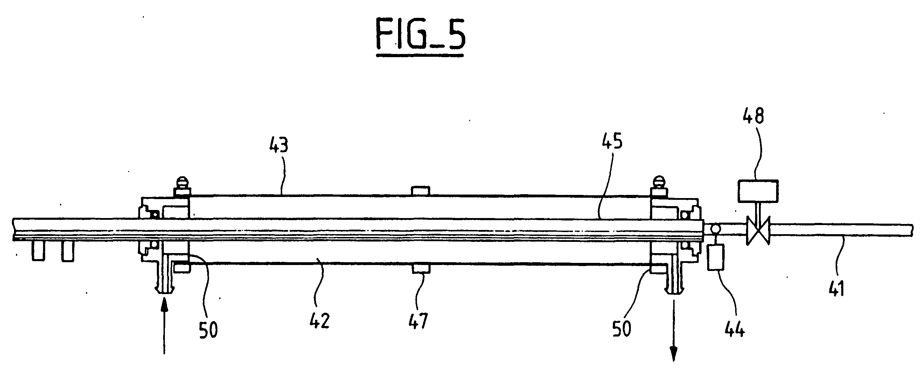

Les figures 4 et 5 sont deux exemples d'un premier mode de réalisation d'un détendeur de gaz à régulation de pression électronique selon l'invention.

La dispositif échangeur de chaleur peut avantageusement être réalisé autour du tuyau 41 d'arrivée de gaz sous le capot moteur. Le liquide de refroidissement 42 du moteur, caloporteur, circule dans une enveloppe, pouvant avoir la forme d'un tuyau de type Durit.

Le tuyau 41 d'arrivée de gaz se prolonge après l'organe 44 de dosage de G.P.L. liquide ou de G.N.V. situé en entrée du détendeur, par un tuyau 45 d'axe longitudinal parallèle ou confondu avec celui de l'enveloppe. Le tuyau 45 est en acier inoxydable ou en aluminium par exemple, de diamètre identique ou supérieur au diamètre de la canalisation d'arrivée de gaz du réservoir, qui sera préférentiellement en acier. L'enveloppe extérieure 43 peut-être préformée à ses extrémités 46 comme le montre la figure 4, pour épouser le diamètre du tuyau 45, ou être dotée d'embouts d'étanchéité 50, servant de supports au tube 45 dans l'enveloppe 43, comme le montre la figure 5.

Le centrage du tuyau 45 de gaz dans l'enveloppe extérieure 43 est assuré par la mise en place d'éléments de centrage entre ces deux éléments, ou bien par le maintien du tuyau d'arrivée de gaz sur la carrosserie du véhicule aux extrémités du dispositif échangeur de chaleur et par celui de l'enveloppe sur la carrosserie au moyen de crochets 47 de fixation en quelques points. L'ensemble de l'échangeur peut être préformé pour suivre un parcours sinueux sous le capot moteur. Cet exemple de réalisation est peu onéreux puisque l'échangeur de chaleur se résume à une Durit, le tuyau de gaz existant par ailleurs pour l'arrivée du gaz.

Ces réalisations sont peu onéreuses et aisées à mettre en oeuvre car elles sont d'une intégration facile, le diamètre extérieur de la Durit étant voisin de 20 à 25 mm et la longueur inférieure à 1 mètre pour des moteurs à faible ou moyenne cylindrée.

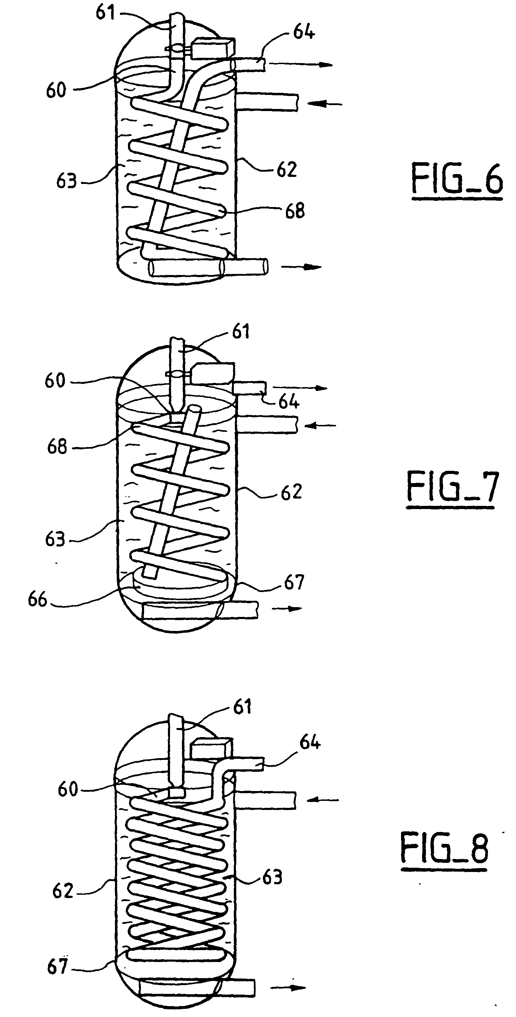

Les figures 6, 7 et 8 représentent d'autres exemples d'un deuxième mode de réalisation d'échangeurs de chaleur compacts et à faible valeur ajoutée. Le principe est identique dans ses grandes lignes au détendeur précédent mais constitue une pièce spécifique. La partie échangeur de chaleur est constituée par un tuyau 60, relié au tuyau 61 d'arrivée du gaz et qui est enroulé selon une hélice 68 par exemple avec sortie 64 du gaz du même côté que son entrée, dans une enveloppe ou récipient 62, qui peut être en plastique, et dont la fonction est identique à celle de la Durit du détendeur précédemment décrit. Ce récipient est parcouru par le liquide 63 de refroidissement du moteur qui apporte les calories nécessaires à la vaporisation du G.P.L. et à son réchauffement ou au réchauffement du G.N.V. lorsque le moteur fonctionne au gaz naturel.

Dans le cas de la figure 7, une des extrémités de l'hélice 68 ou serpentin aboutit à un réservoir 66 placé à l'extrémité 67 du récipient 62, opposée au tuyau d'arrivée 61 du gaz, disposant d'une réserve de liquide destiné à réchauffer le carburant passant dans le réservoir 66.

Dans le cas de la figure 8, le tuyau 60 échangeur de chaleur est enroulé selon une double hélice, l'une allant du tuyau 61 d'entrée du gaz vers l'extrémité opposé 67 du récipient 62 et l'autre servant au retour du gaz vers sa sortie 64, ce qui augmente encore la surface d'échange.

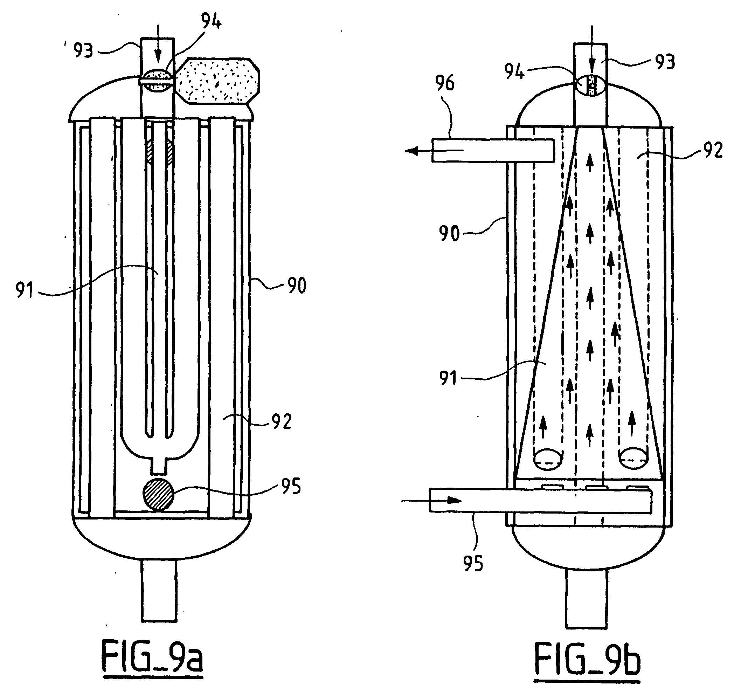

Une autre solution plus compacte mais plus complexe et donc plus chère est représentée sur la figure 9a en vue de face et sur la figure 9b en vue de gauche.

Ce détendeur 90 est constitué d'un échangeur à plaques 91 combiné à un échangeur à tubes. Le G.P.L. qui arrive sous forme liquide par l'entrée 93, donc avec une densité élevée par rapport à la phase gazeuse, lèche les parois rapprochées de l'échangeur à plaques dont la section perpendiculaire au flux de gaz augmente au fur et à mesure de la vaporisation du G.P.L.. Un échangeur à tube 92 prend le relais en fin de vaporisation du G.P.L. pour le réchauffer dans sa phase gazeuse jusqu'à la sortie 94.

Le liquide caloporteur entre par le tuyau 95 et ressort par le tuyau 96.

Des inserts de natures différentes peuvent être introduits au niveau des plaques et des tubes pour favoriser les échanges thermiques entre le liquide de refroidissement moteur et le carburant.

Dans tous les cas des artifices de natures différentes peuvent être intégrés dans le tuyau du détendeur afin d'améliorer en entrée la vaporisation du gaz lorsque le carburant gazeux arrive sous forme liquide, et de manière à favoriser les échanges thermiques du gaz avec le tuyau lorsque ce dernier est sous forme vapeur, par exemple par la mise en place d'inserts de type ailettes, création de rugosités, déformations du tuyau etc...

De même, une électrovanne de sécurité 48 peut être placée en amont de l'échangeur 43, préférentiellement en amont de l'organe de dosage 44 (figure 4). L'organe de dosage est conçu avantageusement de telle manière qu'il soit fermé lorsqu'il n'est pas alimenté électriquement, de sorte à intégrer dans ses fonctions celle d'électrovanne de sécurité dont on peut donc faire l'économie.

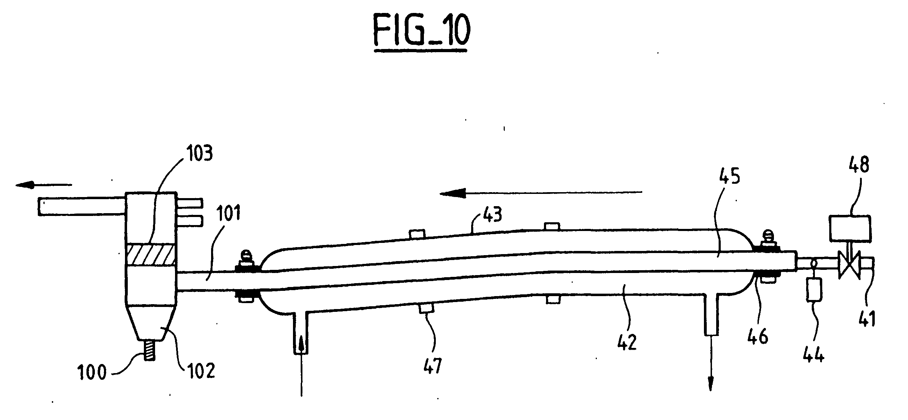

La figure 10 est un exemple de réalisation d'un détendeur de gaz dans lequel est prévu un moyen de purge 100 de la partie échangeur de chaleur afin d'évacuer les boues créées par la vaporisation du G.P.L lors des révisions en après-vente du système. Cette purge s'effectue au niveau d'un point bas de l'échangeur ou en sortie 101 de celui-ci, lorsque c'est possible, grâce à la mise en place d'un petit récipient 102 récupérateur de boues. Pour être efficace, le détendeur doit être orienté de manière à ce que les boues formées s'évacuent naturellement de l'échangeur par gravité.

Dans le cas d'une régulation de pression à une valeur constante, 1.8 bars par exemple, on peut intercaler entre le détendeur et le doseur-distributeur, ou les injecteurs, un petit réservoir 103 de charbon actif ou de zéolithe, ayant pour effet de lisser la pression de sortie du détendeur.

L'effet lié à la mise en place de ce réservoir est d'adsorber du gaz lors des pics de pression et d'en désorber lors des creux de pression, donc de lisser cette dernière.

La présente invention permet différents modes d'asservissement de la pression de sortie du détendeur. Parmi les différents modes d'asservissement envisageables, l'asservissement de la pression à une valeur proportionnelle à la pression dans le collecteur d'admission offre l'avantage de diminuer sensiblement le besoin en dynamique de débit volumique d'injecteurs ou du doseur-distributeur.

En effet, lorsque le conducteur provoque une accélération brutale du type pied à fond, le régime du moteur n'augmente pas brutalement, alors que la pression dans le collecteur d'admission d'air atteint sa valeur maximale en une fraction de seconde. Le débit d'air entrant dans le moteur augmente par conséquent rapidement dans une première phase puisqu'il dépend à l'ordre 1 de la pression dans le collecteur, puis il continue à augmenter en fonction du régime moteur moins rapidement. Aussi, si on souhaite garder un rapport constant entre le débit de gaz et le débit d'air, pour rester dans des conditions de fonctionnement proches de la stoechiométrie, il est important de disposer d'un système pour lequel l'organe principal de dosage de carburant est peu sensible à une variation brutale de la pression collecteur, sinon il faut utiliser un doseur-distributeur, ou des injecteurs à haute dynamique, donc coûteux et difficiles à réaliser.

Un asservissement de la pression de sortie du détendeur à une consigne égale à λ fois la pression du collecteur d'admission rend moins sévère le cahier des charges du doseur-distributeur, dans le cas d'un système monopoint distribué, ou celui des injecteurs de gaz, dans le cas d'un système multipoint gazeux lorsque ce ou ces injecteurs sont directement reliés au collecteur d'admission.

En effet, lorsque λ est suffisamment élevé,

$$\lambda \geq \left(\frac{\gamma+1}{2}\right)^{\frac{\gamma}{\gamma-1}}$$

λ représentant alors le rapport des pressions amont et aval de l'actuateur de gaz et
γ étant le rapport des chaleurs spécifiques à pression et à volume constants, dont les valeurs sont les suivantes :

γ = 1.09 en butane pur, donc λ pour le butane = 1.704
γ = 1.128 en propane pur, donc λ pour le propane = 1.727
γ = 1.31 pour le gaz naturel,
donc λ pour le G.N.V. = 1.838

le fonctionnement du doseur-distributeur ou des injecteurs de gaz est sonique, c'est-à-dire que le débit de gaz au travers des sections de passage régulatrices de débit s'effectue à la vitesse du son. Dans ce cas, et avec un dosage et une distribution du gaz bien conçus, on obtient une insensibilité aux fluctuations de pression situées en aval du dosage. Il est alors possible de supprimer les régulateurs de pression zéro, ce qui représente un gain de coût, mais permet aussi de réduire l'exigence en dynamique du système de dosage, distributeur ou injecteurs. Celui-ci devient en effet, théoriquement indépendant des variations de pression collecteur, ce qui signifie que, sur une accélération brutale du type pied à fond par exemple, où la pression collecteur peut varier de sa valeur minimale à sa valeur maximale en 0.1 seconde, il n'est pas nécessaire de modifier le temps d'injection, ou la section de passage du ou des injecteurs gaz, puisque la correction du débit massique de gaz s'effectue alors par une augmentation de la pression en amont, et donc de la masse volumique en amont injecteur, ou en sortie du détendeur. Seule la correction du temps d'injection au vu de l'augmentation du régime moteur est nécessaire.

Le débit d'air Qair d'un moteur s'exprime au premier ordre en fonction du régime N de rotation du moteur et de la pression Pcoll dans le collecteur d'admission d'air par la formule (E $_1$):

$$(E_1) \qquad Qair = k \times Pcoll \times N$$

k étant au paramètre constant au premier ordre.

Pour un fonctionnement stoechiométrique du moteur, le débit de gaz QG.P.L. est proportionnel au débit d'air, et s'exprime par la formule (E $_2$) :

$$(E_2) \qquad QGPL = k' \times Pcoll \times N$$

k' étant un paramètre constant au premier ordre.

Le débit de gaz QG.P.L. à travers une section de passage S s'exprime par la formule (E $_3$) :

$$(E_3) \qquad GPL = \rho \times S \times V$$

S étant la section efficace, inférieure à la section géométrique ;
ρ étant la masse volumique du gaz au droit de la section efficace ;
V étant la vitesse du gaz, indépendante de la pression en régime sonique.

Le débit de gaz se pilote par l'ouverture plus ou moins grande, en flux continu, ou plus ou moins prolongée en flux pulsé de la section de passage S. Le calcul de la section efficace S s'obtient aisément à partir des deux dernières équations par la formule (E $_4$) :

$$(E_4) \qquad S = \frac{k' \times Pcol \times N}{\rho \times V} \approx \frac{k'' \times Pcoll \times N}{Pgaz\_amont}$$

On constate que la meilleure façon de rendre un doseur-distributeur, ou des injecteurs de gaz, peu sensibles à une variation brusque de la pression collecteur est de fonctionner en débit sonique, la vitesse du gaz étant alors indépendante de la pression, et de piloter la pression en amont de celui-ci à une valeur proportionnelle à la pression collecteur. En effet, si Pgaz amont = λ × Pcoll, l'expression précédente se simplifie pour donner (E $_5$) :

$$(E_5) \qquad S = k''' \times N$$

K''' étant constant à l'ordre 1 vis à vis de la pression collecteur.

Ce type de régulation permet donc de reporter une partie de la difficulté que l'on rencontre lorsqu'on conçoit un doseur-distributeur ou des injecteurs de gaz sur la partie détendeur. Il est en effet difficile de réaliser de façon industrielle des actionneurs qui sont à la fois précis et rapides sur une grande plage de débit. La précision est maintenue au niveau du dosage du gaz, mais la rapidité est en partie supportée par le détendeur. Une telle régulation ne peut pas s'effectuer simplement par un détendeur mécanique et nécessite donc une régulation électronique de la pression.

Cette insensibilité aux variations de pression collecteur est d'autant plus appréciable que l'on fonctionne avec un moteur suralimenté. La dynamique du doseur-distributeur, dans le cas d'un système monopoint distribué, ou celle des injecteurs de gaz, dans le cas d'un système multipoint gazeux, n'est pas à modifier par rapport à celles des mêmes injecteurs utilisés sur le même moteur fonctionnant en atmosphérique. Ce ne serait pas le cas si on régulait la pression de sortie du détendeur à une valeur fixe.

Outre l'intérêt au vu de la dynamique du ou des injecteurs de gaz, la régulation de pression électronique pour un détendeur de gaz présente les avantages suivants :

- meilleur fonctionnement du ou des injecteurs à faible charge, en raison d'une différence de pression de part et d'autre du moyen de dosage (diminution d'un facteur 4 de l'énergie nécessaire à soulever une soupape de dosage de gaz au ralenti par exemple) ;
- une meilleure sensibilité de correction face à un changement de composition du gaz ;
- une meilleure résolution de débit, à iso injecteurs ou à iso doseurs-distributeurs surtout à faible charge où elle peut être 4 fois plus élevée que lorsque la pression de sortie du détendeur est régulée à 1.9 bars constant.

Ce type de régulation n'est nullement limitatif. Un pilotage en pression avec tous les degrés de liberté autorisés par une régulation électronique est possible.
Le détendeur à régulation de pression électronique selon l'invention présente les avantages suivants :

- minimisation des retards par calculs prédictifs du débit de gaz à introduire dans le détendeur ;

- minimisation de l'hystérésis par le même principe ;
- minimisation de l'impact des retards et des phénomènes d'hystérésis restants par calcul prédictif de la pression et de la température en sortie du détendeur, et correction adaptée au niveau de la commande de débit du doseur distributeur ou des injecteurs ;
- suppression de la fragilité des détendeurs vis à vis des coupures franches en décélération par suppression des technologies de régulation à membranes ;
- réduction très sensible des dispersions entre les détendeurs et des effets de vieillissement par un asservissement électronique de la pression ;
- réduction nette de l'encombrement du détendeur, et mise en oeuvre aisée de l'échangeur de chaleur ;
- coût réduit par l'utilisation de composants existant en grande série par ailleurs.

## Revendications

1. Dispositif détendeur-réchauffeur de gaz d'un système d'injection de carburant gazeux pour moteur à combustion interne, comportant un dispositif échangeur de chaleur, un capteur de pression (35), un calculateur électronique de contrôle (33), et un organe (32) de contrôle de la pression de sortie du gaz, le dispositif échangeur de chaleur utilisant le liquide de refroidissement (42) du moteur et le calculateur recevant du capteur de pression (35) une mesure de la pression du carburant en sortie du détendeur et pilotant l'organe (32) de contrôle de la pression, **caractérisé en ce que** le dispositif échangeur de chaleur comprend une enveloppe extérieure (43) de forme cylindrique et un tuyau (45) logé dans l'enveloppe (43) et réalisé en un matériau bon conducteur de la chaleur et compatible à la fois avec le carburant gazeux et avec le liquide de refroidissement, l'enveloppe (43) présentant une entrée et une sortie de liquide de refroidissement espacées l'une de l'autre et assurant une circulation du liquide de refroidissement dans le sens longitudinal de l'enveloppe, et le tuyau (45) étant relié, en entrée de l'échangeur, à un tuyau (41) d'arrivée du carburant gazeux pour transporter le carburant gazeux dans l'enveloppe, la forme de l'échangeur de chaleur étant adaptée au volume sous le capot moteur.

2. Dispositif détendeur-réchauffeur de gaz d'un système d'injection de carburant gazeux selon la revendication 1, **caractérisé en ce que** l'enveloppe cylindrique (43) est placée et centrée autour du tuyau (45) dont l'axe longitudinal est parallèle ou confondu avec celui de l'enveloppe, prolongeant le tuyau (41) d'arrivée du carburant gazeux dont le diamètre est au plus égal à celui du tuyau (45), après l'organe (44) de dosage.

3. Dispositif détendeur-réchauffeur de gaz selon la revendication 2, **caractérisé en ce que** l'enveloppe cylindrique (43) extérieure du dispositif échangeur de chaleur est préformée à ses extrémités (46) pour épouser le diamètre du tuyau (45) de circulation du carburant gazeux.

4. Dispositif détendeur-réchauffeur de gaz selon la revendication 2, **caractérisé en ce que** l'enveloppe cylindrique (43) extérieure du dispositif échangeur de chaleur est dotée d'embouts d'étanchéité (50) servant de supports au tuyau (45) de circulation du carburant gazeux dans l'enveloppe (43).

5. Dispositif détendeur-réchauffeur de gaz selon l'une des revendications 2, 3 ou 4, **caractérisé en ce que** le centrage du tuyau (45) de circulation du carburant gazeux dans l'enveloppe extérieure (43) est assuré par la mise en place d'éléments de centrage entre le tuyau et l'enveloppe.

6. Dispositif détendeur-réchauffeur de gaz selon l'une des revendications 2, 3 ou 4, **caractérisé en ce que** le centrage du tuyau (45) de circulation du carburant gazeux dans l'enveloppe cylindrique (43) extérieure est assuré par le maintien de l'enveloppe sur la carrosserie entourant le moteur au moyen de crochets de fixation (47).

7. Dispositif détendeur-réchauffeur de gaz selon la revendication 1, **caractérisé en ce que** le tuyau de circulation du carburant gazeux est enroulé selon une hélice (68) dans l'enveloppe cylindrique extérieure (62), de telle sorte que la sortie (64) du gaz est placée du même côté que le tuyau d'entrée (61).

8. Dispositif détendeur-réchauffeur de gaz selon la revendication 7, **caractérisé en ce que** l'une des extrémités du tuyau de circulation du carburant gazeux en forme d'hélice, opposée au tuyau d'arrivée (61) du gaz, aboutit à un réservoir (66) placé à l'extrémité (67) de l'enveloppe cylindrique (62), pour assurer une réserve de liquide caloporteur destiné à réchauffer le gaz passant dans ledit réservoir (66).

9. Dispositif détendeur-réchauffeur de gaz selon la revendication 7, **caractérisé en ce que** le tuyau (60) de circulation du carburant gazeux dans l'enveloppe (62) est enroulé selon une double hélice, l'une allant du tuyau (61) d'entrée du gaz vers l'extrémité opposée (67) de l'enveloppe (62) et l'autre servant au retour du gaz vers sa sortie (64) située du même côté que le tuyau d'entrée (61).

10. Dispositif détendeur-réchauffeur de gaz selon l'une des revendications 1 à 9, **caractérisé en ce que** l'asservissement de la pression de sortie du carburant gazeux est assuré par un contrôle du débit du carburant gazeux, en entrée du dispositif détendeur-réchauffeur, au moyen du calculateur électronique.

11. Dispositif détendeur-réchauffeur de gaz selon la revendication 10, **caractérisé en ce que** le capteur de pression est situé entre ledit dispositif détendeur et un dispositif de distribution et/ou d'injection du gaz dans chaque branche du collecteur d'admission du moteur, et délivre l'information de pression du carburant gazeux, en sortie du dispositif détendeur, au calculateur électronique de contrôle moteur, qui commande le déplacement d'un actionneur entre son ouverture et sa fermeture destiné à piloter le débit de gaz en entrée du dispositif détendeur.

12. Dispositif détendeur-réchauffeur de gaz selon la revendication 11, **caractérisé en ce que** la pression de sortie du carburant gazeux est régulée électroniquement à une valeur proportionnelle à la pression dans le collecteur d'admission du moteur par pilotage du débit de gaz en entrée du calculateur électronique pour obtenir un fonctionnement en régime sonique du dispositif de distribution et/ou d'injection du gaz, pour au moins une plage de fonctionnement du moteur.

13. Dispositif détendeur-réchauffeur de gaz selon l'une des revendications 11 ou 12, **caractérisé en ce que** le calculateur pilotant le débit de carburant gazeux en entrée du détendeur en fonction de la pression de sortie, de façon pulsée ou continue, est le calculateur électronique de contrôle du moteur pilotant le fonctionnement en carburant gazeux et éventuellement en carburant gazeux et en essence.

14. Dispositif détendeur-réchauffeur de gaz selon la revendication 1, **caractérisé en ce que** l'organe de dosage (32), placé en entrée du dispositif échangeur de chaleur (31), est de type vanne à boisseau ou à pointeau mue par un moteur ou tout moyen permettant de faire coulisser ou tourner l'organe de dosage.

15. Dispositif détendeur-réchauffeur de gaz selon la revendication 1, **caractérisé en ce que** l'organe de dosage (32), placé en entrée du dispositif échangeur de chaleur (31), est de type injecteur électromagnétique constitué d'un solénoïde et d'une soupape ou aiguille.

16. Dispositif détendeur-réchauffeur de gaz selon la revendication 1, **caractérisé en ce qu'**il comprend de plus une électrovanne de sécurité (48) placée en amont de l'échangeur de chaleur (43) et en amont de l'organe de dosage (44).

17. Dispositif détendeur-réchauffeur de gaz selon l'une des revendications 14 ou 15, **caractérisé en ce que** l'organe de dosage (44) est conçu de manière à être fermé lorsqu'il n'est pas alimenté électriquement et qu'il puisse éviter la mise en place d'une électrovanne de sécurité supplémentaire.

18. Dispositif détendeur-réchauffeur de gaz selon la revendication 1, **caractérisé en ce qu'**il est orienté de manière à ce que les boues formées lors de la vaporisation du carburant gazeux dans le tuyau (45) de circulation s'évacuent naturellement de l'échangeur de chaleur par gravité, et **en ce qu'**il comprend de plus des moyens de purge (100) pour l'évacuation dans un récipient récupérateur (102) en sortie de l'enveloppe extérieure (43) du dispositif échangeur de chaleur.

19. Dispositif détendeur-réchauffeur de gaz selon la revendication 1, **caractérisé en ce que** dans le cas d'une régulation de la pression de sortie du carburant gazeux à une valeur constante, il comprend de plus, en sortie du dispositif échangeur de chaleur (43), un réservoir de charbon actif ou de zéolithe destiné à lisser la pression de sortie du détendeur.

**Patentansprüche**

1. Druckminderer-Heiz-Vorrichtung von Gas eines Einspritzsystems für gasförmigen Kraftstoff für einen Verbrennungsmotor, aufweisend eine Wärmetauschervorrichtung, einen Drucksensor (35), einen elektronischen Steuerrechner (33) und ein Steuerbauteil (32) des Auslassdrucks des Gases, wobei die Wärmetauschervorrichtung die Kühlflüssigkeit (42) des Motors verwendet und der Rechner vom Drucksensor (35) eine Messung des Kraftstoffdrucks am Auslass des Druckminderers empfängt und das Steuerbauteil (32) des Drucks steuert, **dadurch gekennzeichnet, dass** die Wärmetauschervorrichtung eine äußere Hülle (43) einer zylindrischen Form umfasst und ein Rohr (45), welches in der Hülle (43) aufgenommen ist, und welches aus einem gut wärmeleitenden Material realisiert ist und welches gleichzeitig mit dem gasförmigen Kraftstoff und mit der Kühlflüssigkeit kompatibel ist, wobei die Hülle (43) einen Einlass und einen Auslass von Kühlflüssigkeit aufweist, die voneinander beabstandet sind, und welche eine Zirkulation der Kühlflüssigkeit in der Längsrichtung der Hülle sicherstellen, und wobei das Rohr (45) am Einlass des Wärmetauschers mit einem Zuführrohr (41) des gasförmigen Kraftstoffs verbunden ist, um den gasförmigen Kraftstoff in die Hülle zu transportieren, wobei die Form des Wärmetauschers an das Volumen unter der Motorhaube angepasst ist.

**2.** Durckminderer-Heiz-Vornchtung von Gas eines Einspritzsystems von gasförmigem Kraftstoff nach Anspruch 1, **dadurch gekennzeichnet, dass** die zylindrische Hülle (43) um das Rohr (45) gesetzt und zentriert ist, dessen Längsachse parallel ist oder zusammenfällt mit derjenigen der Hülle, verlängernd das Zuführrohr (41) des gasförmigen Kraftstoffs, dessen Durchmesser maximal gleich zu demjenigen des Rohrs (45) nach dem Dosierungsbauteil (44) ist.

**3.** Druckminderer-Heiz-Vorrichtung von Gas nach Anspruch 2, **dadurch gekennzeichnet, dass** die zylindrische äußere Hülle (43) der Wärmetauschervorrichtung an ihren Enden (46) vorgeformt ist, um sich dem Durchmesser des Rohres (45) für die Zirkulation des gasförmigen Kraftstoffs anzuschmiegen.

**4.** Druckminderer-Heiz-Vorrichtung von Gas nach Anspruch 2, **dadurch gekennzeichnet, dass** die zylindrische äußere Hülle (43) der Wärmetauschervorrichtung mit Dichtigkeitsansätzen (50) versehen ist, die als Träger für das Rohr (45) für die Zirkulation des gasförmigen Kraftstoffs in der Hülle (43) dienen.

**5.** Druckminderer-Heiz-Vorrichtung von Gas nach einem der Ansprüche 2, 3 oder 4, **dadurch gekennzeichnet, dass** die Zentrierung des Rohres (45) für die Zirkulation von gasförmigem Kraftstoff in der äußeren Hülle (43) durch das Einsetzen von Zentrierungselementen zwischen dem Rohr und der Hülle sichergestellt ist.

**6.** Druckminderer-Heiz-Vorrichtung von Gas nach einem der Ansprüche 2, 3 oder 4, **dadurch gekennzeichnet, dass** die Zentrierung des Rohres (45) für die Zirkulation von gasförmigem Kraftstoff in der zylindrischen, äußeren Hülle (43) durch das Halten der Hülle an der den Motor umgebenden Karosserie mittels Befestigungshaken (47) sichergestellt ist.

**7.** Druckminderer-Heiz-Vorrichtung von Gas nach Anspruch 1, **dadurch gekennzeichnet, dass** das Rohr für die Zirkulation von gasförmigem Kraftstoff in der zylindrischen äußeren Hülle (62) gemäß einer Schraube (68) derart aufgerollt ist, dass der Gasauslass (64) auf der gleichen Seite wie das Einlassrohr (61) angeordnet ist.

**8.** Druckminderer-Heiz-Vorrichtung von Gas nach Anspruch 7, **dadurch gekennzeichnet, dass** das eine der Enden des Rohres für die Zirkulation von gasförmigem Kraftstoff in Schraubenform, welches dem Zuführrohr (61) von Gas gegenüberliegt, in einem Tank (66) endet, der an das Ende (67) der zylindrischen Hülle (62) gesetzt ist, um eine Reserve von Kühlmittelflüssigkeit sicherzustellen, die dafür bestimmt ist, das Gas aufzuheizen, welches durch diesen Tank (66) geht.

**9.** Druckminderer-Heiz-Vorrichtung von Gas nach Anspruch 7, **dadurch gekennzeichnet, dass** das Rohr (60) für die Zirkulation von gasförmigem Kraftstoff in der Hülle (62) gemäß einer doppelten Schraube aufgerollt ist, wobei die eine von dem Einlassrohr (61) des Gases in Richtung zum gegenüberliegenden Ende (67) der Hülle (62) geht, und wobei die andere der Rückkehr des Gases in Richtung seines Auslasses (64) dient, der auf der gleichen Seite wie das Einlassrohr (61) angeordnet ist.

**10.** Druckminderer-Heiz-Vorrichtung von Gas nach einem der Ansprüche 1 bis 9, **dadurch gekennzeichnet, dass** die Regelung des Auslassdrucks des gasförmigen Kraftstoffs durch eine Überwachung des Durchsatzes von gasförmigem Kraftstoff am Einlass der Druckminderer-Heiz-Vorrichtung mittels des elektrischen Rechners sichergestellt wird.

**11.** Druckminderer-Heiz-Vorrichtung von Gas nach Anspruch 10, **dadurch gekennzeichnet, dass** der Drucksensor zwischen der Druckminderervorrichtung und einer Verteilungsvorrichtung und/oder Einspritzvorrichtung von Gas in jedem Arm des Einlasskrümmers des Motors angeordnet ist und die Druckinformation des gasförmigen Kraftstoffs am Auslass der Druckminderervorrichtung dem elektronischen Rechner der Motorsteuerung liefert, welche die Verstellung eines Betätigungsgeräts zwischen seiner Öffnung und seiner Schließung steuert, das dafür bestimmt ist, den Durchsatz des Gases am Einlass der Druckminderervorrichtung zu steuern.

**12.** Druckminderer-Heiz-Vorrichtung von Gas nach Anspruch 11, **dadurch gekennzeichnet, dass** der Auslassdruck des gasförmigen Kraftstoffs elektronisch auf einen proportionalen Wert zu dem Druck in dem Einlasskrümmer des Motors geregelt ist durch Steuerung des Durchsatzes von Gas am Eingang des elektronischen Rechners, um eine Betriebsweise im Schallbereich der Verteilervorrichtung und/oder Einspritzvorrichtung des Gases für mindestens einen Betriebsbereich des Motors zu erhalten.

**13.** Druckminderer-Heiz-Vornchtung von Gas nach einem der Ansprüche 11 oder 12, **dadurch gekennzeichnet, dass** der Rechner, welcher den Durchsatz von gasförmigem Kraftstoff am Einlass des Druckminderers in Abhängigkeit von dem Auslassdruck auf gepulste oder kontinuierliche Art und Weise steuert, der elektronische Steuerrechner des Motors ist, welcher den Betrieb bei gasförmigem Kraftstoff und gegebenenfalls bei gasförmigem Kraftstoff und bei Benzin steuert.

14. Druckminderer-Heiz-Vorrichtung von Gas nach Anspruch 1, **dadurch gekennzeichnet, dass** das Dosierungsbauteil (32), welches an den Einlass der Wärmetauschervorrichtung (31) gesetzt ist, von dem Typ Kegelventil oder Nadelschieberventil ist, betrieben durch einen Motor oder jedes Mittel, welches es ermöglicht, das Dosierungsbauteil gleiten oder drehen zu lassen.

15. Druckminderer-Heiz-Vorrichtung von Gas nach Anspruch 1, **dadurch gekennzeichnet, dass** das Dosierungsbauteil (32), welches an den Einlass der Wärmetauschervorrichtung (31) gesetzt ist, vom Typ elektromagnetische Einspritzdüse ist, die aus einem Solenoid und einem Ventil oder einer Nadel gebildet ist.

16. Druckminderer-Heiz-Vorrichtung von Gas nach Anspruch 1, **dadurch gekennzeichnet, dass** sie des Weiteren ein Sicherheits-Elektroventil (48) aufweist, das stromaufwärts des Wärmetauschers (43) und stromaufwärts des Dosierungsbauteils (44) gesetzt ist.

17. Druckminderer-Heiz-Vorrichtung von Gas nach einem der Ansprüche 14 oder 15, **dadurch gekennzeichnet, dass** das Dosierungsbauteil (44) derart entworfen ist, dass es geschlossen ist, wenn es nicht elektrisch versorgt wird, und dass es das Einsetzen eines zusätzlichen Sicherheits-Elektroventils verhindern kann.

18. Druckminderer-Heiz-Vorrichtung von Gas nach Anspruch 1, **dadurch gekennzeichnet, dass** sie auf solch eine Art und Weise ausgerichtet ist, dass die Schlämme, welche während der Verdampfung des gas%rmigen Kraftstoffs in dem Zirkulationsrohr (45) gebildet werden, von selbst aus dem Wärmetauscher durch Schwerkraft ausgeschieden werden, und dass sie des Weiteren Entleerungsmittel (100) für das Ausscheiden in einen Auffangbehälter (102) am Auslass der äußeren Hülle (43) der Wärmetauschervorrichtung umfassen.

19. Druckminderer-Heiz-Vorrichtung von Gas nach Anspruch 1, **dadurch gekennzeichnet, dass**, in dem Fall einer Regelung des Auslassdrucks des gasförmigen Kraftstoffs auf einen konstanten Wert, sie des Weiteren am Auslass der Wärmetauschervorrichtung (43) einen Behälter mit Aktivkohle oder Zeolith aufweist, der dafür bestimmt ist, den Auslassdruck des Druckminderers zu glätten.

**Claims**

1. A gas expansion-heating apparatus of a gaseous fuel injection system for an internal combustion engine, comprising a heat exchange device, a pressure sensor (35), an electronic management computer (33) and a member (32) for controlling the outlet pressure of the gas, the heat exchange device using the cooling liquid (42) of the engine and the computer receiving from the pressure sensor (35) a measurement of the pressure of the fuel at the outlet from the expansion device and providing for pilot control of the pressure control member (32), **characterised in that** the heat exchange device comprises an external casing (43) of cylindrical shape and a pipe (45) accommodated in the casing (43) and made of a material which is a good conductor of heat and compatible both with the gaseous fuel and with the cooling liquid, the casing (43) having an inlet and an outlet for the cooling liquid which are spaced from each other and ensuring circulation of the cooling liquid in the longitudinal direction of the casing and the pipe (45) being connected at the inlet of the exchanger to a pipe (41) for the feed of the gaseous fuel for transporting the gaseous fuel into the casing, the shape of the heat exchanger being adapted to the volume under the engine bonnet.

2. A gas expansion-heating apparatus of a gaseous fuel injection system according to claim 1 **characterised in that** the cylindrical casing (43) is positioned and centered around the pipe (45) whose longitudinal axis is parallel to or coincident with that of the casing, prolonging the gaseous fuel feed pipe (41) whose diameter is at most equal to that of the pipe (45) after the metering member (44).

3. A gas expansion-heating apparatus according to claim 2 **characterised in that** the cylindrical external casing (43) of the heat exchange device is pre-shaped at its ends (46) to match the diameter of the gaseous fuel circulation pipe (45).

4. A gas expansion-heating apparatus according to claim 2 **characterised in that** the cylindrical external casing (43) of the heat exchange device is provided with sealing end portions (50) serving as supports for the pipe (45) for the circulation of the gaseous fuel in the casing (43).

5. A gas expansion-heating apparatus according to one of claims 2, 3 and 4 **characterised in that** centering of the pipe (45) for circulation of the gaseous fuel in the external casing (43) is effected by the placement of centering elements between the pipe and the casing.

6. A gas expansion-heating apparatus according to one of claims 2, 3 and 4 **characterised in that** centering of the pipe (45) for circulation of the gaseous fuel in the external casing (43) is effected by supporting the casing on the bodywork surrounding the engine by means of fixing hooks (47).

7. A gas expansion-heating apparatus according to claim 1 **characterised in that** the pipe for circulation of the gaseous fuel is wound in a helix (68) in the cylindrical external casing (62) in such a way that the outlet (64) of the gas is at the same side as the inlet pipe (61).

8. A gas expansion-heating apparatus according to claim 7 **characterised in that** one of the ends of the helical pipe for circulation of the gaseous fuel, in opposite relationship to the gas feed pipe (61), ends at a reservoir (66) placed at the end (67) of the cylindrical casing (62) to provide a reserve of heat-exchange liquid intended to heat the gas passing into said reservoir (66).

9. A gas expansion-heating apparatus according to claim 7 **characterised in that** the pipe (60) for circulation of the gaseous fuel in the casing (62) is wound in a double helix, one going from the gas inlet pipe (61) towards the opposite end (67) of the casing (62) and the other serving for the return of the gas towards its outlet (64) which is at the same side as the inlet pipe (61).

10. A gas expansion-heating apparatus according to one of claims 1 to 9 **characterised in that** the outlet pressure of the gaseous fuel is controlled by controlling the flow rate of the gaseous fuel at the inlet of the expansion-heating apparatus by means of the electronic computer.

11. A gas expansion-heating apparatus according to claim 10 **characterised in that** the pressure sensor is disposed between said expansion device and a device for distribution and/or injection of gas into each branch of the induction manifold of the engine and delivers the information in respect of the pressure of the gaseous fuel at the outlet of the expansion device to the electronic engine management computer which controls the displacement of an actuator between its opening and its closure intended to provide pilot control for the flow rate of gas at the inlet of the expansion device.

12. A gas expansion-heating apparatus according to claim 11 **characterised in that** the outlet pressure of the gaseous fuel is regulated electronically to a value proportional to the pressure in the induction manifold of the engine by pilot control of the flow rate of gas at the input of the electronic computer to obtain operation in a sonic state of the gas distribution and/or injection device for at least one operating range of the engine.

13. A gas expansion-heating apparatus according to one of claims 11 and 12 **characterised in that** the computer providing pilot control for the flow rate of gaseous fuel at the inlet of the expansion device in dependence on the outlet pressure in pulsed or continuous fashion is the electronic engine management computer providing pilot control of operation with gaseous fuel and optionally gaseous fuel and petrol.

14. A gas expansion-heating apparatus according to claim 1 **characterised in that** the metering member (32) disposed at the inlet of the heat exchange device (31) is of plug or needle valve type moved by a motor or any means permitting sliding or rotary movement of the metering member.

15. A gas expansion-heating apparatus according to claim 1 **characterised in that** the metering member (32) disposed at the inlet of the heat exchange device (31) is of electromagnetic injector type formed by a solenoid and a valve or needle member.

16. A gas expansion-heating apparatus according to claim 1 **characterised in that** it further comprises an electrically operated safety valve (48) disposed upstream of the heat exchanger (43) and upstream of the metering member (44).

17. A gas expansion-heating apparatus according to one of claims 14 and 15 **characterised in that** the metering member (44) is designed to be closed when it is not electrically powered and such that it can avoid the provision of an additional electrically operated safety valve.

18. A gas expansion-heating apparatus according to claim 1 **characterised in that** it is oriented in such a way that the sediment formed upon vaporisation of the gaseous fuel in the circulation pipe (45) are naturally discharged from the heat exchanger by gravity and that it further comprises purge means (100) for discharge into a catch container (102) at the outlet of the external casing (43) of the heat exchange device.

19. A gas expansion-heating apparatus according to claim 1 **characterised in that** in the case of regulation of the outlet pressure of the gaseous fuel at a constant value, it further comprises at the outlet of the heat exchange device (43) a reservoir of activated carbon or zeolite intended to smooth the outlet pressure of the expansion device.

CALCULATEUR

FIG_1

9

5

4

7

2

8

6

3

1

12

EP 1 141 535 B1

# FIG_2

FIG_3

32    31
30    35    34

CALCULATEUR

33

FIG_4

43    47    45    48
46
47
46    42    44    41
47

EP 1 141 535 B1

FIG_5

FIG_6

FIG_7

FIG_8

FIG_9b

FIG_9a

FIG_10